# EUROPÄISCHE PATENTSCHRIFT

(11) **EP 1 644 544 B1**
(45) Veröffentlichungstag und Bekanntmachung des Hinweises auf die Patenterteilung: **13.12.2006**
(21) Anmeldenummer: 04740425.6
(22) Anmeldetag: 29.06.2004
(51) Int. Cl.: C22B 34/00, B22F 9/20, C01B 6/00

(54) **VERFAHREN ZUR HERSTELLUNG VON METALLPULVERN ODER METALLHYDRIDPULVERN DER ELEMENTE TI, ZR, HF, V, NB, TA UND CR**
METHOD FOR THE PRODUCTION OF METAL POWDERS OR METAL HYDRIDE POWDERS OF THE ELEMENTS TI, ZR, HF, V, NB, TA AND CR
PROCEDE DE PRODUCTION DE POUDRES METALLIQUES OU DE POUDRES D'HYDRURES METALLIQUES DES ELEMENTS TI, ZR, HF, V, NB, TA ET CR

(30) Priorität: 15.07.2003 DE 10332033
(43) Veröffentlichungstag der Anmeldung: 12.04.2006
(73) Patentinhaber: Chemetall GmbH, 60487 Frankfurt am Main (DE)
(72) Erfinder: BICK, Manfred, 61440 Oberursel (DE); SERMOND, Bernd, 35614 Asslar (DE); WILFING, Gerhard, 35091 Cölbe (DE)
(74) Vertreter: Uppena, Franz
(86) Internationale Anmeldenummer: PCT/EP2004/007032
(87) Internationale Veröffentlichungsnummer: WO 2005/007906

(56) Entgegenhaltungen:
- WO-A-00/67936
- US-A1- 2003 082 097
- US-A1- 2003 110 890

## Beschreibung

Die Erfindung betrifft ein Verfahren zur Herstellung von Metallpulvern, bzw. von Metallhydridpulvern der Elemente Ti, Zr, Hf, V, Nb, Ta und Cr.

Metallpulver der Elemente Ti, Zr, Hf, V, Nb, Ta und Cr und pulverförmige Hydride dieser Metalle werden z.B. in folgenden Anwendungsgebieten eingesetzt: Titan bei der Herstellung von Titanbauteilen für die Flugzeug- und Automobilindustrie, bei der Herstellung von Titanlegierungen und bei der Herstellung von gesinterten AlNiCo-Magneten; Titan, Zirkon und Hafnium in der Pyroindustrie, bei der Herstellung von elektrischen Zündern (z.B. in Airbags) und Zündverzögerungselementen, in Gettermaterialien in Vakuumröhren, Lampen, Vakuumapparaturen und Gasreinigungsanlagen; Hafnium als Legierungselement in Niob-, Tantal-, Titan-, Molybden- und Wolframlegierungen; Vanadium als alternatives Elektrodenmaterial in Metallhydrid/Nickelhydrid-Batterien und in TiAl₆V₄-Legierungen; Niob in der Herstellung von Apparaten für die chemische Industrie und als Legierungselement für ZrNb Legierungen (Nuklearindustrie) und NbHfTi-Legierungen (hoch warmfestes Material für Düsentriebwerke oder Explosionskammern); Tantal in Kondensatoren.

Wegen den zum Teil sehr hohen Anforderungen an die Zuverlässigkeit der o.a. Produkte (z.B. Airbagzünder), ist es wünschenswert, die Metallpulver bzw. Metallhydridpulver von Charge zu Charge reproduzierbar mit gleichbleibenden Eigenschaften (insbesondere in Bezug auf Brennzeit, Zündpunkt, mittlere Korngöße, Korngrößenverteilung und Oxidationswert) herzustellen.

Die Herstellung der Metallpulver kann durch ein Reduktionsverfahren erfolgen. Dazu werden Oxide der Metalle (Ti, Zr, Hf, V, Nb, Ta und Cr) z.B. mit Calcium oder Calciumhydrid reduziert. Die Reduktion wird in einem geschlossenen, inertisierbaren und evakuierbaren Gefäß durchgeführt. Das oder die Reduktionsmittel werden meist im Überschuss zugegeben. Nach der Reduktion werden die entstandenen Reduktionsmitteloxide durch Laugen mit Säure und nachfolgendem Waschen mit Wasser entfernt. Der Sauerstoffgehalt der erhaltenen Metallpulver liegt bei diesem Verfahren zwischen 1 und 5 %.

Alternativ können die Metallpulver aus dem jeweiligen Metall durch Hydrieren und Dehydrieren gewonnen werden (HDH-Verfahren). Das jeweilige Metall wird hydriert und kann in dieser dann spröden Form zu Pulver der gewünschten Feinheit mechanisch zerkleinert werden. Um Schädigungen durch Aufnahme von Sauerstoff und Stickstoff zu vermeiden, muss zur Hydrierung hochreiner Wasserstoff verwendet werden. Die Zerkleinerung des hydrierten Metalls auf die gewünschte Korngröße muss ebenfalls in einer reinen Schutzgasatmosphäre (z.B. Helium oder Argon) erfolgen. Zur nachfolgenden Entfernung des Wasserstoffs wird das Metallhydrid im Vakuum bei erhöhter Temperatur zersetzt. Ebenso werden die Metallhydridpulver hergestellt. Dabei wird lediglich auf die Dehydrierung verzichtet.

Von Nachteil der so hergestellten Metallpulver und Hydride ist unter anderem, dass diese keine reproduzierbare Brennzeit, keine reproduzierbare spezifische Oberfläche, keine reproduzierbare Korngrößenverteilung und keinen reproduzierbaren Zündpunkt aufweisen.

US 2003/110890 offenbart ein Verfahren zur Herstellung von Metallpulvern, bei dem ein Metalloxid mit einem Reduktionsmittel gemischt und in einem Ofen reduziert wird.

Aufgabe der Erfindung ist es, die Nachteile des Standes der Technik zu überwinden und Metallpulver, bzw. Metallhydridpulver der Elemente Ti, Zr, Hf, V, Nb, Ta und Cr bereitzustellen, die eine Brennzeit von 4 s pro 50 cm bis 3000 s pro 50 cm und einen Zündpunkt von 160 °C bis 400 °C und in Einzelfällen darüber hinaus aufweisen.

Die Brennzeit ausgedrückt in s/50cm, wird dabei wie folgt bestimmt: Die zu prüfende Substanz wird zunächst zur Beseitigung störender Agglomerate über zwei Siebe mit den Maschenweiten 250 µm und 45 µm abgesiebt. Gegebenenfalls kann die Probe dabei mit einem Pinsel vorsichtig bewegt werden. Zur Bestimmung der Brennzeit wird das Feingut verwendet, welches das 45 µm Sieb passiert hat. 15 g der Probe werden lose auf eine folgend beschriebe Metallrinne gegeben, mit einer Pappkarte glattgestrichen und der Überschuss durch Abstreifen entfernt. Die Metallrinne ist mit zwei Markierungen versehen, die einen Abstand von 500 mm voneinander angebracht sind. Vor der Anfangsmarkierung wird zusätzlich eine etwa erbsengroße Substanzmenge aufgetragen und mit einem Brenner entzündet. Mit Hilfe einer Zeitaufnahme wird nun die Zeit ermittelt, die der Brennvorgang zum Durchlaufen der Strecke zwischen Anfangs- und Endmarkierung benötigt. Das Analysenergebnis der Brennzeit wird in der Dimension [s/50 cm] angegeben.

Der Zündpunkt wird dabei wie folgt bestimmt: 10 g der zu prüfenden Substanz werden in einen vorgewärmten, sogenannten "Zündblock" eingebracht und es wird die Temperatur gemessen, bei der Selbstzündung eintritt. Der Zündblock, bestehend aus einem eisernen Würfel von Kantenlänge 70 mm mit Material- und Thermoelementbohrung (20 mm und 8 mm Durchmesser, jede Bohrung 35 mm tief, Abstand der Bohrungsmittelpunkte 18 mm), wird nach Einsetzen des Thermometers oder Thermoelementes in die dafür vorgesehene Bohrung mit einem Gebläsebrenner auf eine knapp unterhalb der Zündtemperatur liegende Temperatur vorgeheizt. Dieser Punkt wird durch eine Vorprobe ermittelt. In die Materialbohrung des vorgeheizten Zündblockes wird nun eine Spatelspitze (10 g) des zu untersuchenden Metallpulvers oder Hydrides eingetragen und der Block mit voller Gebläseflamme solange erhitzt, bis das Pulver sich von selbst entzündet. Die dabei erreichte Temperatur ist der Zündpunkt.

Weiterhin ist es wünschenswert, dass die Metallpulver, bzw. Metallhydridpulver einen Gehalt von mindestens 75 Gew.-% Metall, bzw. Metallhydrid, bevorzugt mindestens 88 Gew.-%, besonders bevorzugt mindestens 90 Gew.-%, einen mittleren Korndurchmesser von 1 bis 15 µm, eine bevorzugte Korngrößenverteilung d₅₀ (gemessen mittels Laserbeugung) von 1 bis 20 µm und eine spezifische Oberfläche nach BET von 0,2 bis 5 m²/g aufweisen.

Der mittlere Korndurchmesser wird mit einem "Fisher Sub-Sieve Size Korngrößenbestimmer" (im folgenden FSSS genannt) bestimmt. Eine Beschreibung dieser Messmethode findet sich in den "Instructions, Fisher Model 95 Sub-Sieve Sizer, Catalog No. 14-311, Part No. 14579 (Rev. C), published 01-94" von Fisher Scientific. Auf diese Messbeschreibung wird hier ausdrücklich Bezug genommen.

Gelöst wird die Aufgabe durch ein Verfahren zur Herstellung von Metallpulvern, bzw. Metallhydridpulvern der Elemente Ti, Zr, Hf, V, Nb, Ta und Cr, bei dem ein Oxid dieser Elemente mit einem Reduktionsmittel gemischt und diese Mischung in einem Ofen gegebenenfalls unter Wasserstoffatmosphäre (dann bilden sich Metallhydride) erhitzt wird bis die Reduktionsreaktion beginnt, das Reaktionsprodukt gelaugt wird und anschließend gewaschen und getrocknet wird, wobei das eingesetzte Oxid eine mittlere Korngröße von 0,5 bis 20 µm, bevorzugt von 1 bis 6 µm, eine spezifische Oberfläche nach BET von 0,5 bis 20 m²/g, bevorzugt von 1 bis 12 m²/g und besonders bevorzugt von 1 bis 8 m²/g, und einen Mindestgehalt von 94 Gew.-%, bevorzugt 96 Gew.-% und besonders bevorzugt 99 Gew.-%, aufweist.

Der Anteil an Fe- und Al-Verunreinigungen im Oxid beträgt bevorzugt jeweils < 0,2 Gew.-%, besonders bevorzugt < 0,1 Gew.-% (jeweils gerechnet als Oxid). Der Anteil an Si-Verunreinigungen im Oxid beträgt bevorzugt < 1,5 Gew.-%, besonders bevorzugt < 0,3 Gew.-% (gerechnet als SiO₂). Der Anteil an Na-Verunreinigungen im Oxid beträgt bevorzugt < 0,05 Gew.-% (gerechnet als Na₂O). Der Anteil an P-Verunreinigungen im Oxid beträgt bevorzugt < 0,2 Gew.-% (gerechnet als P₂O₅). Der Glühverlust des Oxids bei 1000 °C (Gewichtskonstanz) beträgt bevorzugt < 1 Gew.-%, besonders bevorzugt < 0,5 Gew.-%. Die Stampfdichte nach EN ISO 787-11 (früher DIN 53194) des Oxids beträgt bevorzugt 800 bis 1600 kg/m³. Das Oxid kann bis zu einem Anteil von 15 Gew.-% durch Zusätze von MgO, CaO, Y₂O₃ oder CeO₂ ersetzt sein.

Es wurde gefunden, dass bei der gezielten Auswahl der oxidischen Rohstoffe mit den beschriebenen Eigenschaften und anschließender Durchführung des Verfahrens Produkte erhalten werden, die eine Brennzeit von 4 s pro 50 cm bis 3000 s pro 50 cm, eine Zündenergie von 1 µJ bis 1 mJ, eine mittlere Korngröße von 1 bis 8 µm, eine spezifische Oberfläche nach BET von 0,2 bis 5 m²/g, einen Zündpunkt von 160 °C bis 400 °C und in Einzelfällen darüber hinaus aufweisen, wobei jeweils reproduzierbare Korngrößenverteilungen erhalten werden. Die Kombination von durchschnittlicher Korngröße und spezifischer Oberfläche in den jeweils angegebenen Bereichen der oxidischen Ausgangsverbindung führt zusammen mit dem angegebenen Mindestgehalt zum gewünschten Produkt.

Als Reduktionsmittel können bevorzugt eingesetzt werden: Erdalkalimetalle und Alkalimetalle und deren jeweilige Hydride. Besonders bevorzugt sind Magnesium, Calcium, Calciumhydrid und Barium oder definierte Mischungen davon. Bevorzugt hat das Reduktionsmittel einen Mindestgehalt von 99 Gew.-%, besonders bevorzugt von 99,5 Gew.%.

Je nach der Wasserstoffzugabemenge während des Reduktionsvorganges im Ofen werden pulverförmige reine Metalle, teilweise hydrierte Metalle oder Metallhydride erhalten. Je höher der Wasserstoffgehalt des Verfahrensproduktes ist, desto größer ist die Brennzeit (d.h. das Metall brennt langsamer) und desto höher ist der Zündpunkt und jeweils umgekehrt.

Die Laugung des Reaktionsproduktes wird bevorzugt mit konzentrierter Salzsäure vorgenommen, die besonders bevorzugt in geringem Überschuss eingesetzt wird.

Die Erfindung wird im folgenden anhand von Beispielen näher erläutert.

### Beispiel 1: Herstellung von Zirkoniumpulver

43 kg ZrO₂ (pulverförmiges Zirkoniumoxid (natürlicher Baddeleyit) mit folgenden Eigenschaften: ZrO₂ + HfO₂ min. 99,0 %; HfO₂ 1,0 - 2,0 %; SiO₂ max. 0,5 %; TiO₂ max. 0,3 %; Fe₂O₃ max. 0,1 %; Glühverlust max. 0,5 %, mittlere Korngröße (nach FSSS) 4 - 6 µm, Anteil monocline Kristallstruktur min. 96 %, spezifische Oberfläche (nach BET) 0,5 -1,5 m²/g) und
31,5 kg Ca (Calcium in Form von Granulat mit folgenden Eigenschaften: Ca min. 99,3 %; Mg max. 0,7 %)
wurden 20 Minuten unter Argonatmosphäre gemischt. Dann wurde das Gemisch in einen Behälter eingetragen. Der Behälter wurde in einen Ofen eingesetzt, der nachfolgend verschlossen und mit Argon bis zu einem Überdruck von 100 hPa gefüllt wurde. Der Reaktionsofen wurde in einer Stunde auf eine Temperatur von ca. 1250 °C aufgeheizt. Sobald die Reaktionsmasse die Temperatur des Ofens erreicht hatte, begann die Reduktionsreaktion:

ZrO₂ + 2 Ca → Zr + 2 CaO

60 Minuten nach dem Einschalten der Ofenheizung wurde diese wieder abgeschaltet. Nachdem die Temperatur auf < 50 C° gefallen war, wurde die Reaktionsmasse aus dem Tiegel entfernt und mit konzentrierter Salzsäure ausgelaugt. Erhalten wurde ein Zirkoniumpulver mit folgender Analyse: Zr + Hf 96,1 %; Hf 2,2 %; O 0,7 %; Si 0,21 %; H 0,16 %; Mg 0,11 %; Ca 0,13 %; Fe 0,07 %; Al 0,1 %; Cl 0,002 %; mittlere Korngröße 4,9 µm; Korngrößenverteilung d₅₀ 9,9 µm; spezifische Oberfläche 0,5 m²/g; Zündpunkt 220 °C; Brennzeit 80 sec/50 cm.

### Beispiel 2: Herstellung von Zirkoniumpulver

36 kg ZrO₂ (pulverförmiges Zirkoniumoxid mit folgenden Eigenschaften: ZrO₂ + HfO₂ min. 99,0 %; HfO₂ 1,0 - 2,0 %; SiO₂ max. 0,2 %; TiO₂ max. 0,25 %; Fe₂O₃ max. 0,02 %; Glühverlust max. 0,4 %, mittlere Korngröße (nach FSSS) 3 - 5 µm, Anteil monocline Kristallstruktur min. 96 %, spezifische Oberfläche (nach BET) 3,0 - 4,0 m²/g) und

17 kg Mg (Magnesium in Form von Granulat mit folgenden Eigenschaften: Mg min. 99,8 %; Schüttdichte max. 0,4 - 0,5 g/cm³
wurden analog Beispiel 1 in einem Behälter in den Ofen eingesetzt. Der Ofen wurde auf 1050 °C aufgeheizt. Sobald die Reaktionsmasse die Temperatur des Ofens erreicht hatte, begann die Reduktionsreaktion:

ZrO₂+2Mg→Zr+2MgO

Die Ofenheizung wurde 20 Minuten nach Start der Reduktion abgeschaltet. Nach dem die Temperatur auf < 50 ° gefallen war, wurde die Reaktionsmasse aus dem Tiegel entfernt und mit konzentrierter Salzsäure ausgelaugt. Erhalten wurde ein Zirkoniumpulver mit folgender Analyse: Zr + Hf 91,7 %; O 1,6 %; Si 0,14 %; H 0,13 %; Mg 0,59 %; Ca < 0,001 %; Fe 0,045 %; mittlere Korngröße 2,5 µm; Korngrößenverteilung d₅₀ 4,3 µm; Zündpunkt 175 °C; Brennzeit 24 sec/50 cm.

## Patentansprüche

1. Verfahren zur Herstellung von Metallpulvern, bzw. Metallhydridpulvern der Elemente Ti, Zr, Hf, V, Nb, Ta und Cr, bei dem ein Oxid dieser Elemente mit einem Reduktionsmittel gemischt und diese Mischung in einem Ofen gegebenenfalls unter Wasserstoffatmosphäre, wobei sich Metallhydride bilden, erhitzt wird, bis die Reduktionsreaktion beginnt, das Reaktionsprodukt gelaugt wird und anschließend gewaschen und getrocknet wird, **dadurch gekennzeichnet, dass** das eingesetzte Oxid eine durchschnittliche Korngröße von 0,5 bis 20 µm, eine spezifische Oberfläche nach BET von 0,5 bis 20 m²/g und einen Mindestgehalt von 94 Gew.-% aufweist.

2. Verfahren nach Anspruch 2, **dadurch gekennzeichnet, dass** die Mischung in dem Ofen auf 800 bis 1400 °C erhitzt wird.

3. Verfahren nach Anspruch 1 oder 2, **dadurch gekennzeichnet, dass** das eingesetzte Oxid eine durchschnittliche Korngröße von 1 bis 6 µm aufweist.

4. Verfahren nach einem der Ansprüche 1 bis 3, **dadurch gekennzeichnet, dass** das eingesetzte Oxid eine spezifische Oberfläche nach BET von 1 bis 12 m²/g aufweist.

5. Verfahren nach Anspruch 4, **dadurch gekennzeichnet, dass** das eingesetzte Oxid eine spezifische Oberfläche nach BET von 1 bis 8 m²/g aufweist.

6. Verfahren nach einem der Ansprüche 1 bis 5, **dadurch gekennzeichnet, dass** das eingesetzte Oxid einen Mindestgehalt von 96 Gew.-% aufweist.

7. Verfahren nach Anspruch 6, **dadurch gekennzeichnet, dass** das eingesetzte Oxid einen Mindestgehalt von 99 Gew.-% aufweist.

8. Verfahren nach einem der Ansprüche 1 bis 7, **dadurch gekennzeichnet, dass** der Anteil an Fe- und Al-Verunreinigungen im Oxid jeweils < 0,2 Gew.-% gerechnet als Oxid beträgt.

9. Verfahren nach Anspruch 8, **dadurch gekennzeichnet, dass** der Anteil an Fe- und Al-Verunreinigungen im Oxid jeweils < 0,1 Gew.-% gerechnet als Oxid beträgt.

10. Verfahren nach einem der Ansprüche 1 bis 9, **dadurch gekennzeichnet, dass** der Anteil an Si-Verunreinigungen im Oxid < 1,5 Gew.% gerechnet als SiO₂ beträgt.

11. Verfahren nach Anspruch 10, **dadurch gekennzeichnet, dass** der Anteil an Si-Verunreinigungen im Oxid < 0,3 Gew.-% gerechnet als SiO₂ beträgt.

12. Verfahren nach einem der Ansprüche 1 bis 11, **dadurch gekennzeichnet, dass** der Anteil an Na- Verunreinigungen im Oxid < 0,05 Gew.-% gerechnet als Na₂O beträgt.

13. Verfahren nach einem der Ansprüche 1 bis 12, **dadurch gekennzeichnet, dass** der Anteil an P-Verunreinigungen im Oxid < 0,2 Gew.-% gerechnet als P₂O₅ beträgt.

14. Verfahren nach einem der Ansprüche 1 bis 13, **dadurch gekennzeichnet, dass** der Glühverlust des Oxids bei 1000 °C (Gewichtskonstanz) < 1 Gew.-% beträgt.

15. Verfahren nach einem der Ansprüche 1 bis 14, **dadurch gekennzeichnet, dass** die Stampfdichte nach EN ISO 787-11 (früher DIN 53194) des Oxids 800 bis 1600 kg/m³ beträgt.

16. Verfahren nach einem der Ansprüche 1 bis 15, **dadurch gekennzeichnet, dass** das Oxid bis zu einem Anteil von 15 Gew.-% durch Zusätze von MgO, CaO, Y₂O₃ oder CeO₂ ersetzt ist.

17. Verfahren nach einem der Ansprüche 1 bis 15, **dadurch gekennzeichnet, dass** als Reduktionsmittel Erdalkalimetalle und/oder Alkalimetalle und/oder deren Hydride eingesetzt werden.

18. Verfahren nach Anspruch 17, **dadurch gekennzeichnet, dass** als Reduktionsmittel Mg, Ca, CaH₂, oder Ba eingesetzt werden.

19. Verfahren nach einem der Ansprüche 1 bis 18, **dadurch gekennzeichnet, dass** das Reduktionsmittel einen Mindestgehalt von 99 Gew.% aufweist.

20. Verfahren nach einem der Ansprüche 1 bis 19, **dadurch gekennzeichnet, dass** die Reaktion unter Schutzgas durchgeführt wird.

21. Verfahren nach einem der Ansprüche 1 bis 20, **dadurch gekennzeichnet, dass** die Laugung des Reaktionsproduktes mit Salzsäure vorgenommen wird.

## Claims

1. A process for preparing metal powders or metal hydride powders of the elements Ti, Zr, Hf, V, Nb, Ta and Cr, in which an oxide of these elements is mixed with a reducing agent and this mixture is heated in an oven, optionally under an atmosphere of hydrogen, in which case metal hydrides are formed, until the reduction reaction starts, the reaction product is leached and then the product is washed and dried, **characterised in that** the oxide used has a mean particle size of 0.5 to 20 µm, a BET specific surface area of 0.5 to 20 m²/g and a minimum content of 94 wt.%.

2. A process according to Claim 1, **characterised in that** the mixture is heated to 800 to 1400°C in an oven.

3. A process according to Claim 1 or 2, **characterised in that** the oxide used has a mean particle size of 1 to 6 µm.

4. A process according to one of Claims 1 to 3, **characterised in that** the oxide used has a BET specific surface area of 1 to 12 m²/g.

5. A process according to Claim 4, **characterised in that** the oxide used has a BET specific surface area of 1 to 8 m²/g.

6. A process according to one of Claims 1 to 5, **characterised in that** the oxide used has a minimum content of 96 wt.%.

7. A process according to Claim 6, **characterised in that** the oxide used has a minimum content of 99 wt.%.

8. A process according to one of Claims 1 to 7, **characterised in that** the proportion of Fe and Al impurities in the oxide are each < 0.2 wt.% calculated as the oxides.

9. A process according to Claim 8, **characterised in that** the proportion of Fe and Al impurities in the oxide are each < 0.1 wt.% calculated as the oxides.

10. A process according to one of Claims 1 to 9, **characterised in that** the proportion of Si impurities in the oxide is < 1.5 wt.% calculated as SiO₂.

11. A process according to Claim 10, **characterised in that** the proportion of Si impurities in the oxide is < 0.3 wt.% calculated as SiO₂.

12. A process according to one of Claims 1 to 11, **characterised in that** the proportion of Na impurities in the oxide is < 0.05 wt.% calculated as Na₂O.

13. A process according to one of Claims 1 to 12, **characterised in that** the proportion of P impurities in the oxide is < 0.2 wt.% calculated as P₂O₅.

14. A process according to one of Claims 1 to 13, **characterised in that** the loss on ignition of the oxide at 1000°C (constant weight) is < 1 wt.%.

15. A process according to one of Claims 1 to 14, **characterised in that** the tamped down bulk density according to EN ISO 787-11 (previously DIN 53194) of the oxide is 800 to 1600 kg/m³.

16. A process according to one of Claims 1 to 15, **characterised in that** a proportion of up to 15 wt.% of the oxide is replaced by additives consisting of MgO, CaO, Y₂O₃ or CeO₂.

17. A process according to one of Claims 1 to 15, **characterised in that** alkaline earth metals and/or alkali metals and/or hydrides of these are used as reducing agents.

18. A process according to Claim 17, **characterised in that** Mg, Ca, CaH₂ or Ba are used as reducing agents.

19. A process according to one of Claims 1 to 18, **characterised in that** the reducing agent has a minimum content of 99 wt.%.

20. A process according to one of Claims 1 to 19, **characterised in that** the reaction is performed under a protective gas.

21. A process according to one of Claims 1 to 20, **characterised in that** the reaction product is leached with hydrochloric acid.

## Revendications

1. Procédé de préparation de poudres métalliques et de poudres d'hydrures métalliques des éléments Ti, Zr, Hf, V, Nb, Ta et Cr, dans lequel on mélange un oxyde de ces éléments avec un agent réducteur et on chauffe ce mélange dans un four, le cas échéant, sous atmosphère d'hydrogène, ce qui permet de former des hydrures métalliques, jusqu'à ce que la réaction de réduction démarre, on extrait le produit de réaction par lixiviation, puis on le lave et on le fait sécher, lequel procédé est **caractérisé en ce que** l'oxyde employé présente une granulométrie moyenne de 0,5 à 20 µm, une surface spécifique, déterminée par la méthode BET, de 0,5 à 20 m²/g et une richesse minimale de 94 % en poids.

2. Procédé selon la revendication 1, **caractérisé en ce que** l'on chauffe le mélange dans le four à une température de 800 à 1400°C.

3. Procédé selon la revendication 1 ou 2, **caractérisé en ce que** l'oxyde employé présente une granulométrie moyenne de 1 à 6 µm.

4. Procédé selon l'une des revendications 1 à 3, **caractérisé en ce que** l'oxyde employé présente une surface spécifique, déterminée par la méthode BET, de 1 à 12 m²/g.

5. Procédé selon la revendication 4, **caractérisé en ce que** l'oxyde employé présente une surface spécifique, déterminée par la méthode BET, de 1 à 8 m²/g.

6. Procédé selon l'une des revendications 1 à 5, **caractérisé en ce que** l'oxyde employé présente une richesse minimale de 96 % en poids.

7. Procédé selon la revendication 6, **caractérisé en ce que** l'oxyde employé présente une richesse minimale de 99 % en poids.

8. Procédé selon l'une des revendications 1 à 7, **caractérisé en ce que** la proportion d'impuretés de type Fe et de type Al se trouvant dans l'oxyde représente à chaque fois moins de 0,2 % en poids, ladite proportion étant calculée en oxyde.

9. Procédé selon la revendication 8, **caractérisé en ce que** la proportion d'impuretés de type Fe et de type Al se trouvant dans l'oxyde représente à chaque fois moins de 0,1 % en poids, ladite proportion étant calculée en oxyde.

10. Procédé selon l'une des revendications 1 à 9, **caractérisé en ce que** la proportion d'impuretés de type Si se trouvant dans l'oxyde représente moins de 1,5 % en poids, ladite proportion étant calculée en SiO₂.

11. Procédé selon la revendication 10, **caractérisé en ce que** la proportion d'impuretés de type Si se trouvant dans l'oxyde représente moins de 0,3 % en poids, ladite proportion étant calculée en SiO₂.

12. Procédé selon l'une des revendications 1 à 11, **caractérisé en ce que** la proportion d'impuretés de type Na se trouvant dans l'oxyde représente moins de 0,05 % en poids, ladite proportion étant calculée en Na₂O.

13. Procédé selon l'une des revendications 1 à 12, **caractérisé en ce que** la proportion d'impuretés de type P se trouvant dans l'oxyde représente moins de 0,2 % en poids, ladite proportion étant calculée en P₂O₅.

14. Procédé selon l'une des revendications 1 à 13, **caractérisé en ce que** la perte au feu de l'oxyde à 1000°C (à poids constant) représente moins de 1 % en poids.

15. Procédé selon l'une des revendications 1 à 14, **caractérisé en ce que** la masse volumique après tassement de l'oxyde, déterminée d'après la norme EN ISO 787-11 (antérieurement, norme DIN 53194) vaut de 800 à 1600 kg/m³.

16. Procédé selon l'une des revendications 1 à 15, **caractérisé en ce que** l'oxyde est remplacé en une proportion atteignant 15 % en poids, par des fractions additionnelles de MgO, CaO, Y₂O₃ ou CeO₂.

17. Procédé selon l'une des revendications 1 à 15, **caractérisé en ce que** l'on utilise comme agents réducteurs, des métaux alcalino-terreux et/ou des métaux alcalins et/ou des hydrures de tels métaux.

18. Procédé selon la revendication 17, **caractérisé en ce que** l'on utilise comme agents réducteurs Mg, Ca, CaH₂ ou Ba.

19. Procédé selon l'une des revendications 1 à 18, **caractérisé en ce que** l'agent réducteur présente une richesse minimale de 99 % en poids.

20. Procédé selon l'une des revendications 1 à 19, **caractérisé en ce que** la réaction est mise en oeuvre sous gaz protecteur.

21. Procédé selon l'une des revendications 1 à 20, **caractérisé en ce que** l'extraction par lixiviation du produit de réaction est réalisée avec de l'acide chlorhydrique.
